# EUROPEAN PATENT APPLICATION

(11) **EP 4 715 850 A1**
(43) Date of publication of application: **25.03.2026**
(21) Application number: 24810729.4
(22) Date of filing: 04.04.2024
(51) Int. Cl.: H01G 9/048, H01G 4/00, H01G 9/00, H01G 9/07, H01G 9/28

(54) **CAPACITOR, ELECTRIC CIRCUIT, CIRCUIT BOARD, APPARATUS, AND METHOD FOR MANUFACTURING CAPACITOR**

(30) Priority: 19.05.2023 JP 2023083366
(71) Applicant: Panasonic Intellectual Property Management Co., Ltd., Kadoma-shi, Osaka 571-0057 (JP)
(72) Inventor: TAKEUCHI, Hiroki, Kadoma-shi, Osaka 571-0057 (JP)
(74) Representative: Grünecker Patent- und Rechtsanwälte PartG mbB
(86) International application number: PCT/JP2024/013887
(87) International publication number: WO 2024/241721

(57) **Abstract**

A capacitor includes: a substrate having electrical conductivity; a first dielectric layer disposed on the substrate; a first conductor disposed on the first dielectric layer and having a layer shape; a second dielectric layer disposed on the first conductor; and a second conductor disposed on the second dielectric layer. The first conductor includes an exposed portion that is covered by neither the second dielectric layer nor the second conductor. The substrate is electrically insulated from the first conductor by the first dielectric layer, and the second conductor is electrically insulated from the first conductor by the second dielectric layer. The substrate includes a conductive portion electrically connected to the second conductor.

## Description

### Technical Field

The present disclosure relates to a capacitor, an electric circuit, a circuit board, a device, and a method for manufacturing the capacitor.

### Background Art

In the related art, capacitors including multiple dielectric layers and multiple conductors alternately stacked on top of one another have been known.

For example, PTL 1 describes a capacitor having a metal-insulator-metal-insulator-metal (MIMIM) stack. The capacitor is formed in a trench in a substrate. The trench has edge walls and a rim. The trench is configured to have a pillar. The pillar has a cross section with a tripod-like profile. The trench includes a filling formed by an alternating layer stack. That stack includes a first electrode, a first auxiliary layer, an additional electrode, an additional auxiliary layer, and a second electrode. The auxiliary layer electrically insulates the electrodes from each other. The electrodes are made from electrically conductive materials, such as doped polysilicon or metals. The substrate is a high-resistance silicon substrate, or a low-resistance substrate, such as a p-type doped silicon wafer.

### Citation List

### Patent Literature

PTL 1: US Patent No. 8283750

### Summary of Invention

### Technical Problem

The present disclosure provides a capacitor that offers advantages in terms of reduced constraints on the size and the substrate while including multiple dielectric layers and multiple conductors.

### Solution to Problem

A capacitor of the present disclosure includes:
a substrate having electrical conductivity;
a first dielectric layer disposed on the substrate;
a first conductor disposed on the first dielectric layer and having a layer shape;
a second dielectric layer disposed on the first conductor; and
a second conductor disposed on the second dielectric layer.

The first conductor includes an exposed portion that is covered by neither the second dielectric layer nor the second conductor,
the substrate is electrically insulated from the first conductor by the first dielectric layer,
the second conductor is electrically insulated from the first conductor by the second dielectric layer, and
the substrate includes a conductive portion electrically connected to the second conductor.

### Advantageous Effects of Invention

According to the present disclosure, there is provided a capacitor that offers advantages in terms of reduced constraints on the size and the substrate while including multiple dielectric layers and multiple conductors.

### Brief Description of Drawings

[Fig. 1] Fig. 1 is a cross-sectional view of an example of a capacitor of the present disclosure.
[Fig. 2A] Fig. 2A is a cross-sectional view schematically illustrating an example of a method for manufacturing the capacitor of the present disclosure.
[Fig. 2B] Fig. 2B is a flowchart illustrating an example of the method for manufacturing the capacitor of the present disclosure.
[Fig. 3] Fig. 3 is a cross-sectional view of another example of the capacitor of the present disclosure.
[Fig. 4] Fig. 4 is a cross-sectional view of part of the capacitor illustrated in Fig. 3.
[Fig. 5] Fig. 5 is a cross-sectional view of yet another example of the capacitor of the present disclosure.
[Fig. 6] Fig. 6 is a cross-sectional view of another example of the method for manufacturing the capacitor of the present disclosure.
[Fig. 7A] Fig. 7A is a schematic view of an example of an electric circuit of the present disclosure.
[Fig. 7B] Fig. 7B is a schematic view of an example of a circuit board of the present disclosure.
[Fig. 7C] Fig. 7C is a schematic view of an example of a device of the present disclosure.

### Description of Embodiments

### (Underlying Knowledge Forming Basis of the Present Disclosure)

For example, a dielectric layer in an electrolytic capacitor may be formed by anodic oxidation of a valve metal. In this case, the material of the dielectric layer is limited to oxides of valve metals, or other materials, and it is not easy to increase the relative permittivity of the dielectric layer obtained by anodic oxidation. For example, the capacitance of a capacitor can be increased by increasing the specific surface area of the electrodes of the capacitor through the use of a porous body containing a valve metal. Such a porous body has an average pore size as small as about 100 nm, and it is not easy to further increase the specific surface area of the electrodes.

The capacitor described in PTL 1 includes a high-resistance silicon substrate or a low-resistance substrate, such as a p-type doped silicon wafer, and is understood to correspond to a so-called silicon capacitor. The silicon capacitor is intended to greatly increase its capacitance by significantly enlarging the electrode surface through three-dimensional structuring using the metal-oxide-semiconductor (MOS) process for semiconductors. It is thus understood that the capacitor described in PTL 1 is subject to constraints on the size and the substrate.

The inventor of the present disclosure has diligently studied the structure of a capacitor that has few constraints on the size and the substrate while including multiple dielectric layers and multiple conductors. As a result, the inventor of the present disclosure has newly found that a capacitor has few constraints on the size and the substrate when having a predetermined relationship among a substrate having electrical conductivity, dielectrics, and conductors, completing the capacitor of the present disclosure.

### (Embodiments)

Embodiments of the present disclosure will be described below with reference to the drawings. The present disclosure is not limited to Embodiments below.

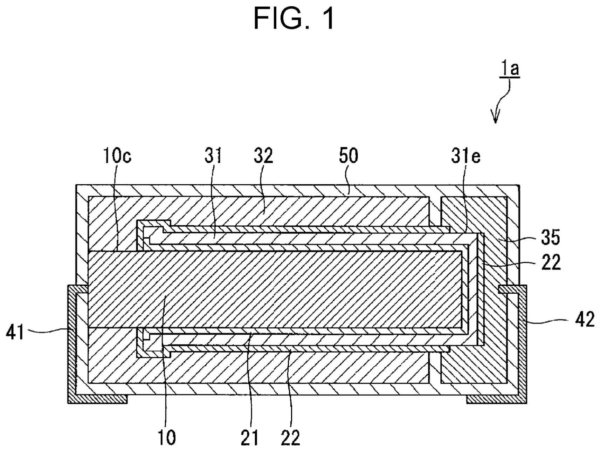

Fig. 1 is a cross-sectional view of an example of a capacitor of the present disclosure. Referring to Fig. 1, a capacitor 1a includes a substrate 10 having electrical conductivity, a first dielectric layer 21, a first conductor 31, a second dielectric layer 22, and a second conductor 32. The first dielectric layer 21 is disposed on the substrate 10. The first conductor 31 is disposed on the first dielectric layer 21 and has a layer shape. The second dielectric layer 22 is disposed on the first conductor 31. The second conductor 32 is disposed on the second dielectric layer 22. The first conductor 31 includes an exposed portion 31e that is covered by neither the second dielectric layer 22 nor the second conductor 32. The substrate 10 is electrically insulated from the first conductor 31 by the first dielectric layer 21. The second conductor 32 is electrically insulated from the first conductor 31 by the second dielectric layer 22. The substrate 10 further includes a conductive portion 10c electrically connected to the second conductor 32. According to this configuration, a portion including the first dielectric layer 21 and a portion including the second dielectric layer 22 may be electrically connected in parallel in the capacitor 1a, so that the capacitor 1a easily has a high capacitance. In addition, the substrate 10 is not limited to any particular substrate as long as it has electrical conductivity, and there are few constraints on the substrate in the capacitor 1a. It is also possible to manufacture the capacitor 1a by using a process other than the semiconductor MOS process. The capacitor 1a has few constraints on the size, and the capacitor 1a may be provided as, for example, a capacitor with a larger size than a silicon capacitor.

The electrical connection between the conductive portion 10c and the second conductor 32 is not limited to any particular manner. Referring to Fig. 1, the conductive portion 10c may, for example, be in contact with the second conductor 32. According to this configuration, the capacitor 1a tends to have a simple structure. The conductive portion 10c may be configured differently from the portions other than the conductive portion 10c in the substrate 10. For example, the conductive portion 10c may be constituted by a conductive coating formed on the surface of the body of the substrate 10. The conductive portion 10c may be electrically connected to the second conductor 32, with another conductive member disposed between the conductive portion 10c and the second conductor 32. In this case, for example, the conductive portion 10c is protected by another conductive member, and the capacitor 1a tends to have high durability.

Fig. 1 is a cross-sectional view of the capacitor 1a having a three-dimensional shape. Referring to Fig. 1, the conductive portion 10c may be surrounded by, for example, the second conductor 32. This configuration prevents or reduces electrical connection failures between the conductive portion 10c and the second conductor 32 and easily improves the reliability of the capacitor 1a. The conductive portion 10c is configured to have, for example, a columnar surface, and the second conductor 32 is formed to surround the columnar surface. For example, a portion of the second conductor 32 disposed on the second dielectric layer 22 and a portion of the second conductor 32 surrounding the conductive portion 10c are integrally formed. The second conductor 32 is, for example, formed in a cylindrical shape having an annular bottom, and the annular bottom surrounds the conductive portion 10c. The second conductor 32 has, for example, a cylindrical shape.

Referring to Fig. 1, the capacitor 1a further includes, for example, a first terminal 41 and a second terminal 42. The first terminal 41 is electrically connected to the substrate 10 or the second conductor 32. In the capacitor 1a, the first terminal 41 is, for example, electrically connected to the substrate 10 or the second conductor 32. The first terminal 41 is, for example, electrically connected to the substrate 10 and is also electrically connected to the second conductor 32 by the substrate 10. The second terminal 42 is electrically connected to the first conductor 31. The first terminal 41 and the second terminal 42 regulate the potential of the substrate 10 or the second conductor 32 and the potential of the first conductor 31.

In the capacitor 1a, for example, the anode includes the first terminal 41, and the cathode includes the second terminal 42. In the capacitor 1a, the anode may include the second terminal 42, and the cathode may include the first terminal 41.

The electrical connection between the first terminal 41 and the substrate 10 or the second conductor 32 is not limited to any particular manner. The first terminal 41 includes, for example, a lead wire, and one end of the lead wire is fixed to the substrate 10 or the second conductor 32.

The electrical connection between the second terminal 42 and the first conductor 31 is not limited to any particular manner. The first conductor 31 is, for example, electrically connected to the second terminal 42 by a conductive adhesive portion 35. According to this configuration, the conductive adhesive portion 35 can protect the first conductor 31, and the capacitor 1a tends to have high durability.

Referring to Fig. 1, the conductive adhesive portion 35 is, for example, in contact with the exposed portion 31e. The second terminal 42 includes, for example, a lead wire, and one end of the lead wire is fixed by using the conductive adhesive portion 35.

The conductive adhesive portion 35 is not limited to any particular configuration as long as it has electrical conductivity and adhesive properties. The conductive adhesive portion 35 contains, for example, silver or a conductive polymer. According to this configuration, the electrical connection between the second terminal 42 and the first conductor 31 in the manufacture of the capacitor 1a tends to eliminate the need for high-temperature processing and improve the yield of the capacitor 1a. In addition, the electrical connection between the second terminal 42 and the first conductor 31 is unlikely to have defects, and the capacitor 1a tends to have high reliability. When the conductive adhesive portion 35 contains silver, the conductive adhesive portion 35 contains, for example, a resin-containing binder and silver particles dispersed in the conductive adhesive portion 35.

Referring to Fig. 1, the capacitor 1a further includes, for example, a case 50. The case 50 contains the substrate 10, the first dielectric layer 21, the first conductor 31, the second dielectric layer 22, the second conductor 32, and the conductive adhesive portion 35. The case 50 is made of a dielectric, such as a resin. The case 50 includes, for example, inside the case 50, a partition that electrically insulates the second conductor 32 from the conductive adhesive portion 35. Part of the first terminal 41 and part of the second terminal 42 are extended to the outside of the case 50.

Referring to Fig. 1, the capacitor 1a has a MIMIM structure including the substrate 10, the first dielectric layer 21, the first conductor 31, the second dielectric layer 22, and the second conductor 32. Fig. 1 illustrates an example of one MIMIM structure contained in the case 50, but the present disclosure is not limited to this example. The case 50 may contain a plurality of MIMIM structures stacked on top of one another.

The material of the substrate 10 is not limited to any particular material as long as it has electrical conductivity. The substrate 10 may contain, for example, a metal or a semiconductor whose electrical conductivity has been enhanced by doping. The substrate 10 preferably has high electrical conductivity. From the viewpoint of high electrical conductivity, the substrate 10 preferably contains a metal. The metal may be a valve metal. In this case, the first dielectric layer 21 can be formed by anodic oxidation. Examples of the valve metal include Al, Ta, Ti, Hf, Zr, Si, and Nb.

The substrate 10 may have a sheet shape or a columnar shape.

The thickness of the first dielectric layer 21 is not limited to any particular value. The thickness of the first dielectric layer 21 is, for example, more than or equal to 5 nm. With this thickness, leakage current is unlikely to occur, and the capacitor 1a easily has a desired voltage resistance. The thickness of the first dielectric layer 21 is, for example, less than or equal to 500 nm. With this thickness, the capacitor 1a more easily has a high capacitance. The thickness of the first dielectric layer 21 may be more than or equal to 10 nm, and may be less than or equal to 400 nm, less than or equal to 300 nm, less than or equal to 200 nm, less than or equal to 100 nm, less than or equal to 50 nm, or less than or equal to 20 nm.

The material of the first dielectric layer 21 is not limited to any particular material. The first dielectric layer 21 contains, for example, an oxide. In this case, the oxide contains at least one selected from the group consisting of hafnium, zirconium, aluminum, tantalum, titanium, silicon, zinc, and niobium. Examples of the oxide include HfO₂, ZrO₂, Hf₁₋ₓZrₓO₂, Al₂O₃, Ta₂O₅, TiO₂, SiO₂, ZnO, and Nb₂O₅. The first dielectric layer 21 containing such an oxide may be formed, for example, by anodic oxidation of a valve metal. Thus, the first dielectric layer 21 may be an anodic oxide film. The oxide preferably contains at least one selected from the group consisting of Al₂O₃ and Ta₂O₅. In this case, the capacitor 1a tends to have a high withstand voltage.

The first dielectric layer 21 may contain an inorganic compound. In this case, the inorganic compound contains, for example, at least one selected from the group consisting of an oxide, a nitride, and an oxynitride. The inorganic compound contains, for example, at least one selected from the group consisting of hafnium, zirconium, aluminum, tantalum, titanium, silicon, zinc, and niobium.

The first dielectric layer 21 may be an oxide film other than an anodic oxide film, or may be a vapor-deposited film. In this specification, vapor deposition may include physical vapor deposition and chemical vapor deposition as described in Japanese Industrial Standards JIS H0211-1992. The vapor-deposited film may be formed by, for example, a vapor phase method, such as chemical vapor deposition. In this case, the first dielectric layer 21 contains at least one selected from the group consisting of an oxide, a nitride, and an oxynitride. Examples of the oxide include HfO₂, ZrO₂, Hf₁₋ₓZrₓO₂, Al₂O₃, Ta₂O₅, TiO₂, SiO₂, ZnO, and Nb₂O₅. Examples of the nitride include HfN, ZrN, Hf1-xZrxN, AlN, and SiN. Examples of the oxynitride include HfON, ZrON, HfZrON, AlON, and SiON.

The thickness of the first conductor 31 is not limited to any particular value. The thickness of the first conductor 31 is, for example, more than or equal to 20 nm. With this thickness, the first conductor 31 tends to have a low electrical resistance. The thickness of the first conductor 31 is, for example, less than or equal to 500 nm. With this thickness, the capacitor 1a tends to have a high capacitance density per volume. The thickness of the first conductor 31 may be more than or equal to 30 nm, more than or equal to 40 nm, or more than or equal to 50 nm, and may be less than or equal to 400 nm, less than or equal to 300 nm, less than or equal to 200 nm, or less than or equal to 100 nm.

The material of the first conductor 31 is not limited to any particular material. The first conductor 31 contains, for example, at least one selected from the group consisting of Ti, W, Mo, Co, Ru, CoSi₂, NiSi, TiN, TaN, indium tin oxide (ITO), ZnO, indium gallium zinc oxide (IGZO), WO₃, and TiAlN.

The method for forming the first conductor 31 is not limited to any particular method. The first conductor 31 is, for example, a vapor-deposited film. The first conductor 31 is formed by, for example, a vapor phase method, such as chemical vapor deposition. In this case, the first conductor 31 easily covers a desired portion of the first dielectric layer 21. The first conductor 31 is preferably formed by atomic layer deposition (ALD). In this case, the first conductor 31 easily covers a desired portion of the first dielectric layer 21, and the first conductor 31 tends to be a uniform layer. The first conductor 31 may be formed by physical vapor deposition, such as sputtering.

Referring to Fig. 1, the first dielectric layer 21 and the first conductor 31 are, for example, arranged on a plurality of intersecting surfaces of the substrate 10.

The thickness of the second dielectric layer 22 is not limited to any particular value. The thickness of the second dielectric layer 22 is, for example, more than or equal to 5 nm. With this thickness, leakage current is unlikely to occur, and the capacitor 1a easily has a desired voltage resistance. The thickness of the second dielectric layer 22 is, for example, less than or equal to 500 nm. With this thickness, the capacitor 1a more easily has a high capacitance. The thickness of the second dielectric layer 22 may be more than or equal to 10 nm, and may be less than or equal to 400 nm, less than or equal to 300 nm, less than or equal to 200 nm, or less than or equal to 100 nm.

The material of the second dielectric layer 22 is not limited to any particular material. The second dielectric layer 22 contains, for example, an inorganic compound. The inorganic compound contains, for example, at least one selected from the group consisting of an oxide, a nitride, and an oxynitride. In addition, the inorganic compound contains, for example, at least one selected from the group consisting of hafnium, zirconium, aluminum, tantalum, titanium, silicon, niobium, and zinc. When the inorganic compound in the second dielectric layer 22 contains an oxide, the oxide may contain at least one selected from the group consisting of hafnium, zirconium, aluminum, tantalum, titanium, silicon, niobium, and zinc. Examples of the oxide include HfO₂, ZrO₂, Hf₁₋ₓZrₓO₂, Al₂O₃, Ta₂O₅, TiO₂, SiO₂, Nb₂O₅, and ZnO. Examples of the nitride include HfN, ZrN, Hf1-xZrxN, AlN, and SiN. Examples of the oxynitride include HfON, ZrON, HfZrON, AlON, and SiON.

The method for forming the second dielectric layer 22 is not limited to any particular method. The second dielectric layer 22 is, for example, a vapor-deposited film. The second dielectric layer 22 is formed by, for example, a vapor phase method, such as chemical vapor deposition. In this case, the second dielectric layer 22 easily covers a desired portion of the first conductor 31. The second dielectric layer 22 is preferably formed by ALD. In this case, the second dielectric layer 22 easily covers a desired portion of the first conductor 31, and the second dielectric layer 22 tends to be a uniform layer. The second dielectric layer 22 may be formed by physical vapor deposition, such as sputtering.

The material of the second conductor 32 is not limited to any particular material. The second conductor 32 contains, for example, at least one selected from the group consisting of a conductive polymer, an electrolyte, manganese oxide, Ti, W, Mo, Co, Ru, CoSi₂, NiSi, TiN, TaN, ITO, ZnO, IGZO, WO₃, and TiAlN.

The second conductor 32 preferably contains a conductive polymer. In this case, the second conductor 32 easily exhibits a self-healing function, and the capacitor 1a tends to have high reliability. Examples of the conductive polymer include polyaniline and polypyrrole.

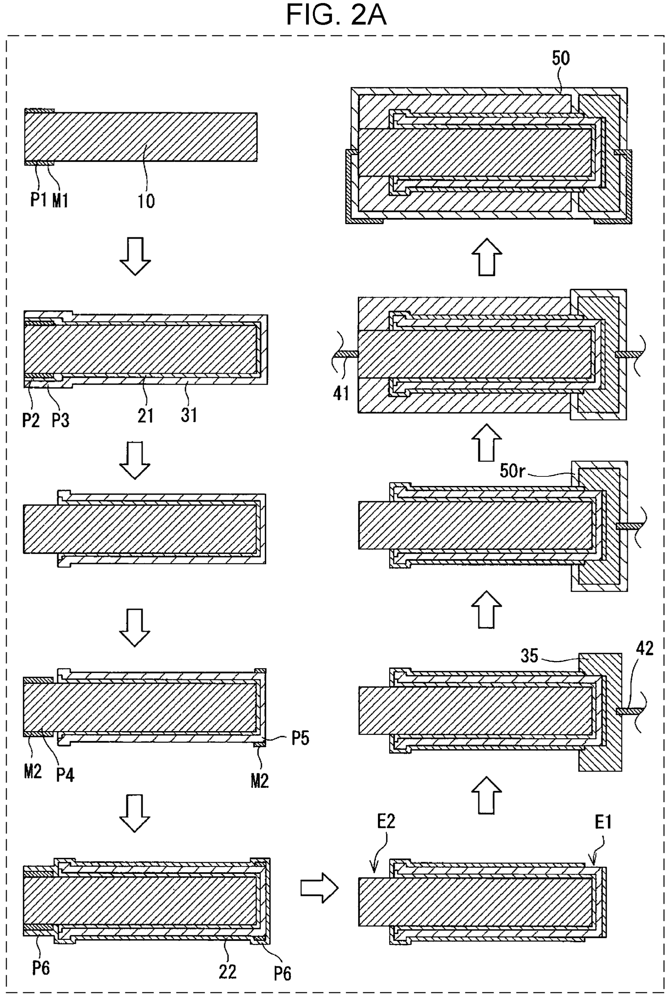

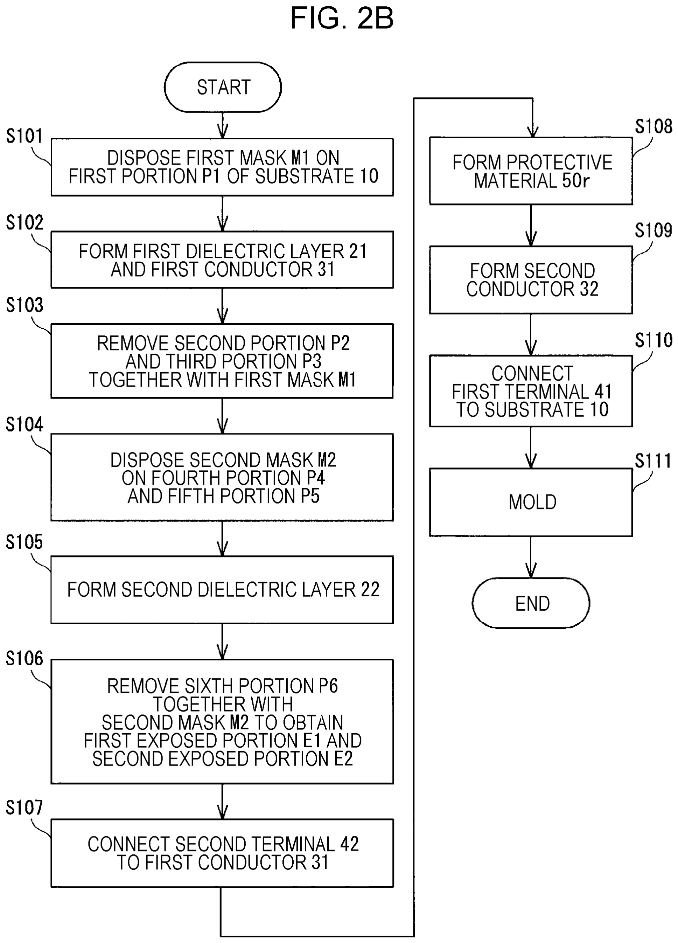

Fig. 2A is a cross-sectional view schematically illustrating an example of a method for manufacturing the capacitor of the present disclosure. Fig. 2B is a flowchart illustrating an example of the method for manufacturing the capacitor of the present disclosure. Referring to Figs. 2A and 2B, the method for manufacturing the capacitor 1a includes, for example, the following (i) to (vi). According to this method, there are few constraints on the substrate 10 and few constraints on the size of the capacitor 1a that can be manufactured.
(i) The first dielectric layer 21 is formed on the substrate 10 having electrical conductivity.
(ii) A layer is formed on the first dielectric layer 21 by using the first conductor 31.
(iii) The second dielectric layer 22 is formed on the first conductor 31.
(iv) The second conductor 32 is formed on the second dielectric layer 22.
(v) Part of the surface of the first conductor 31 is exposed to obtain a first exposed portion E1.
(vi) The substrate 10 is electrically connected to the second conductor 32 by a second exposed portion E2 obtained by exposing part of the surface of the substrate 10.

Referring to Figs. 2A and 2B, the method for manufacturing the capacitor 1a may include, for example, the following (ia) to (iva). According to this method, each layer can be disposed at a desired position by using masks M1 and M2.
(ia) With the first mask M1 disposed on a first portion P1, which is part of the surface of the substrate 10, the first dielectric layer 21 is formed on the substrate 10 and the first mask M1, and a layer is formed on the first dielectric layer 21 by using the first conductor 31.
(iia) A second portion P2, which is part of the first dielectric layer 21 formed on the first mask M1, and a third portion P3, which is part of the first conductor 31 disposed on the second portion P2, are removed together with the first mask M1.
(iiia) After removing the first mask M1, the second dielectric layer 22 is formed on the second mask M2, the substrate 10, and the first conductor 31, with the second mask M2 in place. The second mask M2 is disposed on a fourth portion P4, which is part of the first portion P1, and a fifth portion P5, which is part of the surface of the first conductor 31.
(iva) A sixth portion P6, which is part of the second dielectric layer 22 formed on the second mask M2, is removed together with the second mask M2 to obtain the first exposed portion E1 and the second exposed portion E2.

Referring to Fig. 2B, for example, in Step S101, the first mask M1 is disposed on the first portion P1 of the substrate 10. The first portion P1 is, for example, the surface of one end portion of the substrate 10. Next, in Step S102, the first dielectric layer 21 and the first conductor 31 are formed. The first dielectric layer 21 may be formed, for example, by anodic oxidation, or by a vapor phase method, such as ALD, chemical vapor deposition (CVD), mist CVD, or sputtering. The first conductor 31 is formed, for example, by a vapor phase method, such as ALD, chemical vapor deposition (CVD), mist CVD, or sputtering.

Next, in Step S103, the second portion P2 and the third portion P3 are removed together with the first mask M1. Next, in Step S104, the second mask M2 is disposed on the fourth portion P4 and the fifth portion P5. The fourth portion P4 is part of the first portion P1 and is, for example, the surface of one end portion of the substrate 10. The fifth portion P5 is part of the surface of the first conductor 31 and is, for example, the surface of the end portion of the first conductor 31 located near the end portion of the substrate 10 opposite to the fourth portion P4.

Next, in Step S105, the second dielectric layer 22 is formed. The second dielectric layer 22 may be formed, for example, by a vapor phase method, such as ALD, CVD, mist CVD, or sputtering.

Next, in Step S106, the sixth portion P6 is removed together with the second mask M2 to obtain the first exposed portion E1 and the second exposed portion E2.

Next, in Step S107, the second terminal 42 is electrically connected to the first conductor 31. For example, a conductive adhesive is supplied so as to make contact with the first exposed portion E1, and the conductive adhesive is solidified to form the conductive adhesive portion 35. The second terminal 42 is fixed by using the conductive adhesive portion 35.

Next, in Step S108, a protective material 50r is formed so as to surround the first exposed portion E1 and the conductive adhesive portion 35. Next, in Step S109, the second conductor 32 is formed. The second conductor 32 is formed so as to make contact with the second exposed portion E2. In addition, the second conductor 32 is formed so as not to make contact with the first exposed portion E1. The second conductor 32 is thus electrically insulated from the first conductor 31. The second conductor 32 may be formed by electropolymerization or by a vapor phase method, such as ALD, CVD, mist CVD, or sputtering.

Next, in Step S110, the first terminal 41 is electrically connected to the substrate 10. For example, the first terminal 41 is attached so that one end of the first terminal 41 makes contact with the substrate 10.

Next, in Step S111, the case 50 is formed by molding. At this time, part of the first terminal 41 and part of the second terminal 42 are extended to the outside of the case 50.

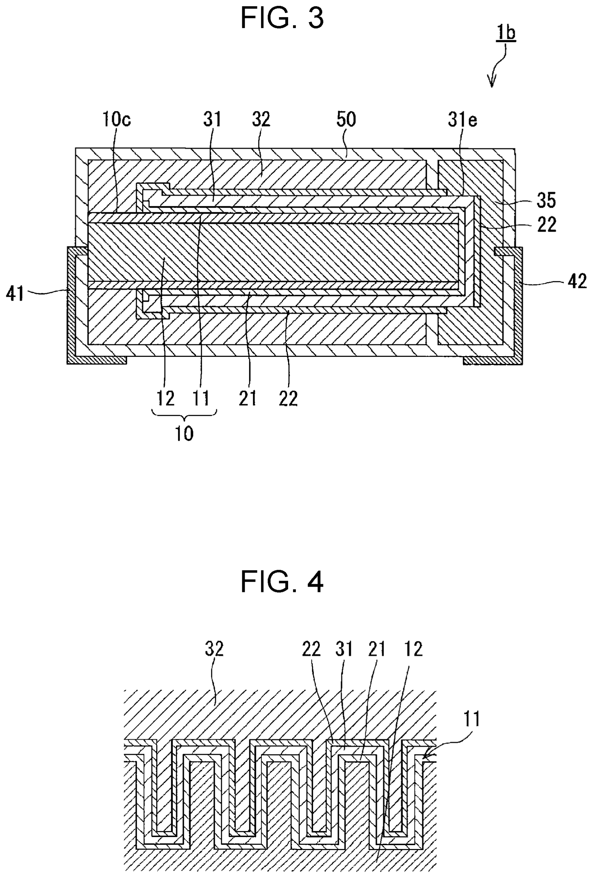

Fig. 3 is a cross-sectional view of another example of the capacitor of the present disclosure. A capacitor 1b illustrated in Fig. 3 has the same structure as the capacitor 1a, except for the portions specifically described. The components of the capacitor 1b that are the same as or correspond to those of the capacitor 1a are denoted by the same reference signs, and detailed description is omitted. The description given for the capacitor 1a also applies to the capacitor 1b, unless technically inconsistent.

Referring to Fig. 3, the substrate 10 includes a porous section 11 in the capacitor 1b. The first dielectric layer 21 is disposed on the porous section 11. According to this configuration, the capacitor 1b easily has a large electrode area, and the capacitor 1b more easily has a high capacitance.

Fig. 4 is a cross-sectional view of part of the capacitor illustrated in Fig. 3. Fig. 4 is a cross-sectional view of the porous section 11 in contact with the first dielectric layer 21 and the surrounding portion of the porous section 11 in the capacitor 1b. Referring to Fig. 4, the first dielectric layer 21, the first conductor 31, and the second dielectric layer 22 are formed to cover the wall surface of the porous section 11. The pores in the porous section 11 may extend straight without branching, or may branch and extend. The porous section 11 may have a trench-like, sponge-like, lattice-like, tunnel-like, or other similar structure.

The porous section 11 contains, for example, a valve metal. In this case, for example, the first dielectric layer 21 can be formed on the porous section 11 by anodic oxidation.

The valve metal contained in the porous section 11 may be aluminum. In this case, the porous section 11 may be formed, for example, by electrolytic etching of aluminum foil. Thus, the capacitor 1b easily has a larger electrode area, and the capacitor 1b more easily has a high capacitance.

The porous section 11 may contain a metal sintered body. In this case, the capacitor 1b easily has a larger electrode area, and the capacitor 1b more easily has a high capacitance.

The metal sintered body contains, for example, tantalum. In this case, the capacitor 1b easily has a larger electrode area, and the capacitor 1b more easily has a high capacitance.

Referring to Fig. 3, the conductive portion 10c may be formed by the porous section 11. In this case, for example, the second conductor 32 may be present inside the porous section 11 when the conductive portion 10c makes contact with the second conductor 32. This configuration prevents or reduces electrical connection failures between the conductive portion 10c and the second conductor 32. The conductive portion 10c may be formed by a non-porous portion of the substrate 10.

Referring to Fig. 3, the substrate 10 includes a dense section 12. The dense section 12 is a non-porous portion. The dense section 12 constitutes, for example, the core of the substrate 10. For example, the porous section 11 is formed around the dense section 12 in the capacitor 1b.

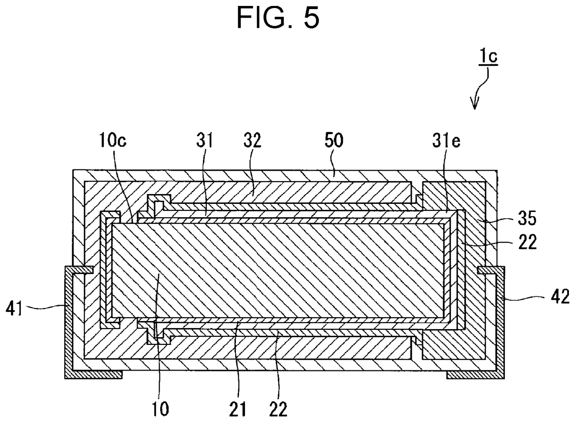

Fig. 5 is a cross-sectional view of yet another example of the capacitor of the present disclosure. A capacitor 1c illustrated in Fig. 5 has the same structure as the capacitor 1a, except for the portions specifically described. The components of the capacitor 1c that are the same as or correspond to those of the capacitor 1a are denoted by the same reference signs, and detailed description is omitted. The description given for the capacitor 1a also applies to the capacitor 1c, unless technically inconsistent.

Referring to Fig. 5, the first terminal 41 is electrically connected to the second conductor 32 in the capacitor 1c. In addition, the first terminal 41 is electrically connected to the substrate 10 by the second conductor 32.

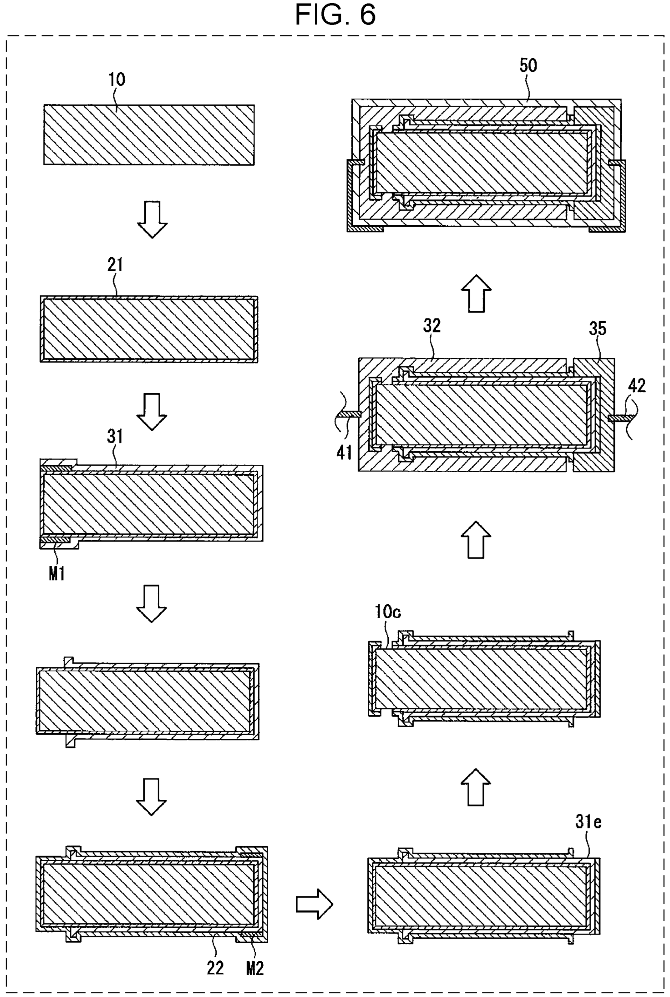

Fig. 6 is a cross-sectional view of another example of the method for manufacturing the capacitor of the present disclosure. Fig. 6 illustrates an example of the method for manufacturing the capacitor 1c. Referring to Fig. 6, first, the first dielectric layer 21 is formed on the substrate 10. The first dielectric layer 21 may be formed by anodic oxidation, or by a vapor phase method, such as ALD, CVD, mist CVD, or sputtering.

Next, the first conductor 31 is formed on the first dielectric layer 21. The first conductor 31 is formed, for example, by a vapor phase method, such as ALD, CVD, mist CVD, or sputtering. Before forming the first conductor 31, a mask M1 is disposed on an end portion of the substrate 10. This mask M1 is removed together with part of the first conductor 31 deposited on the mask M1 after forming the first conductor 31.

Next, the second dielectric layer 22 is formed on the first conductor 31 and the first dielectric layer 21. The second dielectric layer 22 is formed, for example, by a vapor phase method, such as ALD, CVD, mist CVD, or sputtering. Before forming the second dielectric layer 22, a mask M2 is disposed on the first conductor 31 at an end portion opposite to the end portion on which the mask M1 had been disposed. The mask M2 is removed together with the second dielectric layer 22 deposited on the mask M2 after forming the second dielectric layer 22. This process provides the exposed portion 31e.

Next, at the end portion of the substrate 10 at which the mask M1 had been disposed, part of the first dielectric layer 21 and part of the second dielectric layer 22 on the substrate 10 are removed by etching, laser processing, cutting, or other methods. This process forms the conductive portion 10c.

Next, the second conductor 32 is formed on the conductive portion 10c and the second dielectric layer 22. As a result, the conductive portion 10c of the substrate 10 makes contact with the second conductor 32 and is electrically connected to the second conductor 32. The second conductor 32 is formed so as not to make contact with the exposed portion 31e and is electrically insulated from the first conductor 31. The second conductor 32 may be formed by electropolymerization, or by a vapor phase method, such as ALD, CVD, mist CVD, or sputtering. The second conductor 32 is connected to the first terminal 41.

Next, the conductive adhesive portion 35 is formed on the exposed portion 31e. The conductive adhesive portion 35 is formed so as not to make contact with the second conductor 32 and is electrically insulated from the second conductor 32. Next, the conductive adhesive portion 35 is connected to the second terminal 42. Finally, the case 50 is formed by molding. At this time, part of the first terminal 41 and part of the second terminal 42 are extended to the outside of the case 50.

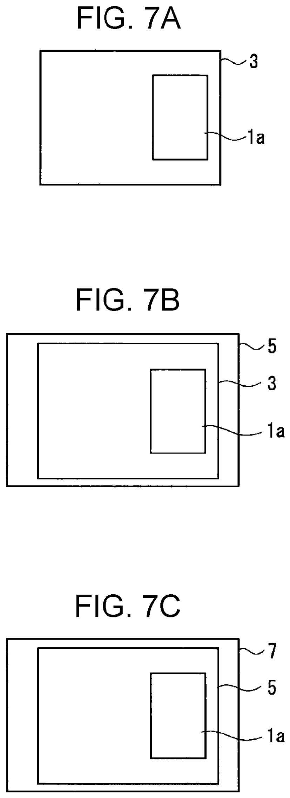

Fig. 7A is a schematic view of an example of an electric circuit of the present disclosure. Referring to Fig. 7A, an electric circuit 3 includes the capacitor 1a. The electric circuit 3 may be an active circuit or a passive circuit. The electric circuit 3 may be a discharge circuit, a smoothing circuit, a decoupling circuit, or a coupling circuit. Since the electric circuit 3 includes the capacitor 1a, the electric circuit 3 tends to exhibit desired performance. For example, noise is likely to be reduced in the electric circuit 3. The electric circuit 3 may include the capacitor 1b or 1c.

Fig. 7B is a schematic view of an example of a circuit board of the present disclosure. Referring to Fig. 7B, a circuit board 5 includes the capacitor 1a. For example, the electric circuit 3 including the capacitor 1a is formed on the circuit board 5. Since the circuit board 5 includes the capacitor 1a, the circuit board 5 tends to exhibit desired performance. The circuit board 5 may be an embedded board or a motherboard. The circuit board 5 may include the capacitor 1b or 1c.

Fig. 7C is a schematic view of an example of a device of the present disclosure. Referring to Fig. 7C, a device 7 includes the capacitor 1a. The device 7 includes, for example, the circuit board 5 including the capacitor 1a. Since the device 7 includes the capacitor 1a, the device 7 tends to exhibit desired performance. The device 7 may be an electronic device, a communication device, a signal processor, or a power supply. The device 7 may be a server, an AC adapter, an accelerator, or a flat panel display, such as a liquid crystal display (LCD). The device 7 may be a USB charger, a solid state drive (SSD), an information terminal, such as a PC, a smartphone, or a tablet PC, or an Ethernet switch. The device 7 may include the capacitor 1b or 1c.

### (Appendix)

According to the above description, the following techniques are disclosed.

### (Technique 1)

A capacitor comprising:
a substrate having electrical conductivity;
a first dielectric layer disposed on the substrate;
a first conductor disposed on the first dielectric layer and having a layer shape;
a second dielectric layer disposed on the first conductor; and
a second conductor disposed on the second dielectric layer, wherein
the first conductor includes an exposed portion that is covered by neither the second dielectric layer nor the second conductor,
the substrate is electrically insulated from the first conductor by the first dielectric layer,
the second conductor is electrically insulated from the first conductor by the second dielectric layer, and
the substrate includes a conductive portion electrically connected to the second conductor.

### (Technique 2)

The capacitor according to Technique 1, wherein the conductive portion is in contact with the second conductor.

### (Technique 3)

The capacitor according to Technique 1 or 2, wherein the conductive portion is surrounded by the second conductor.

### (Technique 4)

The capacitor according to any one of Techniques 1 to 3, wherein
the substrate includes a porous section, and
the first dielectric layer is disposed on the porous section.

### (Technique 5)

The capacitor according to Technique 4, wherein the porous section contains a valve metal.

### (Technique 6)

The capacitor according to Technique 5, wherein the valve metal is aluminum.

### (Technique 7)

The capacitor according to Technique 4, wherein the porous section contains a metal sintered body.

### (Technique 8)

The capacitor according to Technique 7, wherein the metal sintered body contains tantalum.

### (Technique 9)

The capacitor according to any one of Techniques 1 to 8, further comprising:
a first terminal electrically connected to the substrate or the second conductor; and
a second terminal electrically connected to the first conductor.

### (Technique 10)

The capacitor according to Technique 9, further comprising a conductive adhesive portion containing silver or a conductive polymer,
wherein the first conductor is electrically connected to the second terminal by the conductive adhesive portion.

### (Technique 11)

The capacitor according to any one of Techniques 1 to 10, wherein
at least one selected from the group consisting of the first dielectric layer and the second dielectric layer contains an inorganic compound,
the inorganic compound contains at least one selected from the group consisting of an oxide, a nitride, and an oxynitride, and
the oxide contains at least one selected from the group consisting of hafnium, zirconium, aluminum, tantalum, titanium, silicon, zinc, and niobium.

### (Technique 12)

The capacitor according to any one of Techniques 1 to 11, wherein the first conductor contains at least one selected from the group consisting of Ti, W, Mo, Co, Ru, CoSi₂, NiSi, TiN, TaN, indium tin oxide (ITO), ZnO, indium gallium zinc oxide (IGZO), WO₃, and TiAlN.

### (Technique 13)

The capacitor according to any one of Techniques 1 to 12, wherein the second conductor contains at least one selected from the group consisting of a conductive polymer, an electrolyte, manganese oxide, Ti, W, Mo, Co, Ru, CoSi₂, NiSi, TiN, TaN, indium tin oxide (ITO), ZnO, indium gallium zinc oxide (IGZO), WO₃, and TiAlN.

### (Technique 14)

An electric circuit comprising the capacitor according to any one of Techniques 1 to 13.

### (Technique 15)

A circuit board comprising the capacitor according to any one of Techniques 1 to 13.

### (Technique 16)

A device comprising the capacitor according to any one of Techniques 1 to 13.

### (Technique 17)

A method for manufacturing a capacitor, the method comprising:
forming a first dielectric layer on a substrate having electrical conductivity;
forming a layer on the first dielectric layer by using a first conductor;
forming a second dielectric layer on the first conductor;
forming a second conductor on the second dielectric layer;
obtaining a first exposed portion by exposing part of a surface of the first conductor; and
electrically connecting the substrate to the second conductor by a second exposed portion obtained by exposing part of a surface of the substrate.

### (Technique 18)

The method for manufacturing the capacitor according to Technique 17, wherein
in the forming of the first dielectric layer and the forming of the layer by using the first conductor, the first dielectric layer is formed on the substrate and a first mask, and the layer is formed on the first dielectric layer by using the first conductor, with the first mask disposed on a first portion that is part of the surface of the substrate;
the method further comprises removing, together with the first mask, a second portion and a third portion, the second portion being part of the first dielectric layer formed on the first mask, the third portion being part of the first conductor disposed on the second portion;
in the forming of the second dielectric layer, after removing the first mask, the second dielectric layer is formed on a second mask, the substrate, and the first conductor, with the second mask disposed on a fourth portion and a fifth portion, the fourth portion being part of the first portion, the fifth portion being part of the surface of the first conductor; and
in the obtaining of the first exposed portion and the electrically connecting of the substrate to the second conductor, a sixth portion is removed together with the second mask to obtain the first exposed portion and the second exposed portion, the sixth portion being part of the second dielectric layer formed on the second mask.

### EXAMPLES

The present disclosure will be described below in more detail by way of Examples. The following Examples are presented for illustration purposes only, and the present disclosure is not limited to the following Examples.

### <Example 1>

An Al foil with a thickness of 120 µm was prepared as a conductive substrate. An Al₂O₃ film was formed on the surface of the Al foil by anodic oxidation to obtain a first dielectric layer. In anodic oxidation, the Al foil was immersed in a 0.3 mol/L aqueous solution of diammonium adipate, and in this state, a voltage of 7 V was applied while the Al foil was used as the anode. The thickness of the Al₂O₃ film was 10 nm. Taking advantage of the fact that anodic oxidation does not proceed in a region that is not immersed in an aqueous solution of diammonium adipate, a portion having no Al₂O₃ film on the surface was provided at an end portion of the Al foil to form a conductive portion. A 50 nm Ti film was formed on the Al₂O₃ film by RF magnetron sputtering to obtain a first conductive layer. A mask, which was a heat-resistant adhesive tape, was disposed so as to completely cover the conductive portion at the end portion of the Al foil, and the Ti film was provided so that the conductive portion of the Al foil was electrically insulated from the Ti film. Next, a 20 nm ZrO₂ film was formed by RF magnetron sputtering to obtain a second dielectric layer. A mask, which was a heat-resistant adhesive tape, was disposed on the conductive portion at the end portion of the Al foil and on the Ti film at an end portion opposite to the conductive portion of the Al foil to form a conductive portion and an exposed portion where the Ti film was exposed. Finally, a Ti film with a thickness of 50 nm was formed on the ZrO₂ film by RF magnetron sputtering to form a second conductive layer. Before forming the second conductive layer, a mask, which was a heat-resistant adhesive tape, was disposed on the exposed portion to prevent the Ti film from forming on the exposed portion. The Ti film was formed on the conductive portion. In this way, a capacitor according to Example 1 having a MIMIM structure was obtained.

Using a prober, contact was made from the exposed portion while the second conductive layer was used as one electrode and the first conductive layer was used as the other electrode in the capacitor according to Example 1. Impedance measurements were conducted using Modulab available from Solartron Analytical. The results are shown in Table 1.

### <Comparative Example 1>

A conductive substrate, a first dielectric layer, and a first conductive layer were formed by the same method as in Example 1. A conductive substrate, which was an Al foil with a thickness of 120 µm, was prepared. The surface of the Al foil was porous. An Al₂O₃ film was formed on the Al foil surface by anodic oxidation. In anodic oxidation, the Al foil was immersed in a 0.3 mol/L aqueous solution of diammonium adipate, and in this state, a voltage of 7 V was applied while the Al foil was used as the anode. The thickness of the formed Al₂O₃ film was 10 nm. A Ti film with a thickness of 50 nm was formed on the Al₂O₃ film by RF magnetron sputtering to form a first conductive layer. In this way, a capacitor according to Comparative Example 1 having an MIM structure was obtained.

By the same method as in Example 1, a prober was used to establish contact while the conductive substrate was used as one electrode and the first conductive layer was used as the other electrode. Impedance measurements were conducted using Modulab available from Solartron Analytical. The results are shown in Table 1.

Table 1 shows that the capacitor having the MIMIM structure according to Example 1 has a higher capacitance than the capacitor having the MIM structure according to Comparative Example 1. Since the capacitor according to Example 1 has the MIMIM structure, the dielectric layers in the capacitor according to Example 1 have a larger specific surface area than the dielectric layer in the capacitor according to Comparative Example 1, and the capacitor according to Example 1 thus has a larger capacitance.

**[Table 1]**

| | Structure | First Dielectric Layer | Second Dielectric Layer | Capacitance |
|---|---|---|---|---|
| Example 1 | MIMIM | 10 nm thick Al₂O₃ film | 20 nm thick ZrO₂ film | 398 nF |
| Comparative Example 1 | MIM | 10 nm thick Al₂O₃ film | - | 177 nF |

### Industrial Applicability

The capacitor according to the present disclosure has few constraints on the size and the substrate while having the MIMIM structure.

### Reference Signs List

1a, 1b, 1c capacitor
3 electric circuit
5 circuit board
7 device
10 substrate
10c conductive portion
11 porous section
12 dense section
21 first dielectric layer
22 second dielectric layer
31 first conductor
31e exposed portion
32 second conductor
35 conductive adhesive portion
41 first terminal
42 second terminal
50 case
50r protective material
E1 first exposed portion
E2 second exposed portion
P1 first portion
P2 second portion
P3 third portion
P4 fourth portion
P5 fifth portion
P6 sixth portion
M1 first mask
M2 second mask

## Claims

1. A capacitor comprising:
a substrate having electrical conductivity;
a first dielectric layer disposed on the substrate;
a first conductor disposed on the first dielectric layer and having a layer shape;
a second dielectric layer disposed on the first conductor; and
a second conductor disposed on the second dielectric layer, wherein
the first conductor includes an exposed portion that is covered by neither the second dielectric layer nor the second conductor,
the substrate is electrically insulated from the first conductor by the first dielectric layer,
the second conductor is electrically insulated from the first conductor by the second dielectric layer, and
the substrate includes a conductive portion electrically connected to the second conductor.

2. The capacitor according to claim 1, wherein the conductive portion is in contact with the second conductor.

3. The capacitor according to claim 1, wherein the conductive portion is surrounded by the second conductor.

4. The capacitor according to claim 1, wherein
the substrate includes a porous section, and
the first dielectric layer is disposed on the porous section.

5. The capacitor according to claim 4, wherein the porous section contains a valve metal.

6. The capacitor according to claim 5, wherein the valve metal is aluminum.

7. The capacitor according to claim 4, wherein the porous section contains a metal sintered body.

8. The capacitor according to claim 7, wherein the metal sintered body contains tantalum.

9. The capacitor according to claim 1, further comprising:
a first terminal electrically connected to the substrate or the second conductor; and
a second terminal electrically connected to the first conductor.

10. The capacitor according to claim 9, further comprising a conductive adhesive portion containing silver or a conductive polymer,
wherein the first conductor is electrically connected to the second terminal by the conductive adhesive portion.

11. The capacitor according to claim 1, wherein
at least one selected from the group consisting of the first dielectric layer and the second dielectric layer contains an inorganic compound,
the inorganic compound contains at least one selected from the group consisting of an oxide, a nitride, and an oxynitride, and
the oxide contains at least one selected from the group consisting of hafnium, zirconium, aluminum, tantalum, titanium, silicon, zinc, and niobium.

12. The capacitor according to claim 1, wherein the first conductor contains at least one selected from the group consisting of Ti, W, Mo, Co, Ru, CoSi₂, NiSi, TiN, TaN, indium tin oxide, ZnO, indium gallium zinc oxide, WO₃, and TiAlN.

13. The capacitor according to claim 1, wherein the second conductor contains at least one selected from the group consisting of a conductive polymer, an electrolyte, manganese oxide, Ti, W, Mo, Co, Ru, CoSi₂, NiSi, TiN, TaN, indium tin oxide, ZnO, indium gallium zinc oxide, WO₃, and TiAlN.

14. An electric circuit comprising the capacitor according to any one of claims 1 to 13.

15. A circuit board comprising the capacitor according to any one of claims 1 to 13.

16. A device comprising the capacitor according to any one of claims 1 to 13.

17. A method for manufacturing a capacitor, the method comprising:
forming a first dielectric layer on a substrate having electrical conductivity;
forming a layer on the first dielectric layer by using a first conductor;
forming a second dielectric layer on the first conductor;
forming a second conductor on the second dielectric layer;
obtaining a first exposed portion by exposing part of a surface of the first conductor; and
electrically connecting the substrate to the second conductor by a second exposed portion obtained by exposing part of a surface of the substrate.

18. The method for manufacturing the capacitor according to claim 17, wherein
in the forming of the first dielectric layer and the forming of the layer by using the first conductor, the first dielectric layer is formed on the substrate and a first mask, and the layer is formed on the first dielectric layer by using the first conductor, with the first mask disposed on a first portion that is part of the surface of the substrate;
the method further comprises removing, together with the first mask, a second portion and a third portion, the second portion being part of the first dielectric layer formed on the first mask, the third portion being part of the first conductor disposed on the second portion;
in the forming of the second dielectric layer, after removing the first mask, the second dielectric layer is formed on a second mask, the substrate, and the first conductor, with the second mask disposed on a fourth portion and a fifth portion, the fourth portion being part of the first portion, the fifth portion being part of the surface of the first conductor; and
in the obtaining of the first exposed portion and the electrically connecting of the substrate to the second conductor, a sixth portion is removed together with the second mask to obtain the first exposed portion and the second exposed portion, the sixth portion being part of the second dielectric layer formed on the second mask.
